**Europäisches Patentamt**

**European Patent Office**

**Office européen des brevets**

(11) Publication number: **0 240 940**
**A2**

# (12) EUROPEAN PATENT APPLICATION

(21) Application number: **87104903.7**

(22) Date of filing: **02.04.87**

(51) Int. Cl.³: **C 04 B 28/26**
**C 23 C 22/66**
//(C04B28/26, 22:16, 24:24),
(C04B28/26, 22:06, 24:24),
(C04B28/26, 22:08, 24:24)

(30) Priority: **03.04.86 JP 77830/86**

(43) Date of publication of application:
**14.10.87 Bulletin 87/42**

(84) Designated Contracting States:
**DE FR GB**

(71) Applicant: **SHOWA ALUMINUM CORPORATION**
**224, 6-cho Kaizan-cho**
**Sakai Osaka(JP)**

(72) Inventor: **Mizoguchi, Masaaki**
**c/o Showa Aluminum Corp. 224,6-cho,Kaizan-cho**
**Sakai-shi Osaka(JP)**

(72) Inventor: **Inoue, Susumu**
**c/o Showa Aluminum Corp. 224,6-cho,Kaizan-cho**
**Sakai-shi Osaka(JP)**

(72) Inventor: **Otsuka, Tatsuo**
**c/o Showa Aluminum Corp. 224,6-cho,Kaizan-cho**
**Sakai-shi Osaka(JP)**

(72) Inventor: **Isoyama, Eizo**
**c/o Showa Aluminum Corp. 224,6-cho,Kaizan-cho**
**Sakai-shi Osaka(JP)**

(74) Representative: **Patentanwälte TER MEER - MÜLLER -**
**STEINMEISTER**
**Mauerkircherstrasse 45**
**D-8000 München 80(DE)**

(54) Composition for forming hydrophilic film on aluminum.

(57) A composition for forming a hydrophilic film on aluminum comprises an alkali silicate, an inorganic hardening agent and a water-soluble organic high-molecular-weight compound. The composition is useful for aluminum fin materials for producing heat exchanger fins, aluminum products such as aluminum heat exchangers comprising fins and tubes in combination, and materials of such products. The high-molecular-weight compounds effectively prevents the alkali silicate from giving off a cement odor and also sustains over a prolonged period of time the hydrophilic properties of the film prepared from the alkali silicate and the hardening agent. The composition forms hydrophilic films releasing no cement odor and retaining sustained hydrophilic properties over a long period.

EP 0 240 940 A2

1

COMPOSITION FOR FORMING HYDROPHILIC FILM ON ALUMINUM

The present invention relates to a composition for forming a hydrophilic film on aluminum, for example, on the surface of an aluminum fin material for heat exchangers and on the surface of aluminum heat exchangers comprising the combination of fins and tubes.

The term "aluminum" as used herein includes not only pure aluminum but also aluminum alloys.

Generally with heat exchangers, especially with the evaporators of room air conditioners and of air conditioners for motor vehicles, the surface temperature of the fins drops below the dew point of the atmosphere, permitting deposition of water drops on the surface of the fins. The deposition of water drops results in increased resistance to the passage of air and a reduced air flow between the fins to entail a reduced heat exchange efficiency. Such phenomena occur markedly especially when the fin pitch is decreased to improve the performance of the heat exchanger and to render the exchanger smaller. The wettability of the fin surface greatly influences the heat exchange efficiency. High wettability of the fin surface makes it difficult for the condensed water vapor to form water drops, reducing the resistance to the air flow and increasing the amount of air flow to achieve a higher heat exchange efficiency. Good wettability further prevents the water deposited on the fins from splashing and the outdoor heat exchanger from frosting.

The wettability of the surface of aluminum fins has heretofore been improved by coating the fin surface with a film using a hydrophilic resin or water glass (alkali silicate, see Examined Japanese Patent Publication SHO 53-48177).

However, the film of the former material has the drawback of becoming gradually impaired in hydrophilic properties and failing to exhibit sustained resistance to water and oil, while the film prepared from the latter material gives off a cement odor due to the alkali silicate to lower the commercial value of the product.

In view of these problems, the main object of the present invention is to provide a composition for forming a hydrophilic film which gives off no cement odor and which retains sustained hydrophilic properties over a prolonged period of time.

The composition of the present invention for forming a hydrophilic film on aluminum comprises an alkali silicate, an inorganic hardening agent and a water-soluble organic high-molecular-weight compound.

The hydrophilic film forming composition is used for aluminum fin materials for producing heat exchanger fins, aluminum products such as aluminum heat exchangers comprising the combination of fins and tubes, and materials for such products. Suitable aluminum fin materials are coiled materials which can be treated for forming a film and shaped continuously.

The water-soluble organic high-molecular-weight compound serves to effectively prevent the alkali silicate from giving off a cement odor and also to sustain over a prolonged period the hydrophilic properties of the film prepared from the alkali silicate and the inorganic hardening agent.

Thus, the composition of the present invention forms hydrophilic films which release no cement odor and retain sustained hydrophilic properties over a prolonged period of time.

4

Examples of useful alkali silicates as one of the components of the hydrophilic film forming composition are sodium silicate, potassium silicate, lithium silicate, etc.

The alkali silicate acts to impart hydrophilic properties to aluminum. The silicate to be used is at least 1 in the ratio of $SiO_2/M_2O$ wherein M is an alkali metal such as lithium, sodium or potassium. Especially preferable are alkali silicates which are 2 to 5 in $SiO_2/M_2O$ ratio. If the $SiO_2/M_2O$ ratio is less than 1, $SiO_2$ is smaller than the alkali component in proportion, permitting the alkali component to corrode aluminum markedly. Further if the proportion of the alkali silicate in the composition is small, the composition fails to form a satisfactory hydrophilic film on the surface of aluminum. Conversely, if the proportion is excessive, the film obtained is too hard, and the coated material will not be shaped easily with good abrasion resistance with dies.

The inorganic hardening agent, another component of the hydrophilic film forming composition, acts to harden the alkali silicate film. The hardening agent is used in an amount of 0.1 to 5 parts by weight per part by weight of the alkali silicate. If the amount is less than 0.1 part by weight, the alkali silicate film will not be hardened satisfactorily, whereas amounts exceeding 5 parts by weight make the film less resistant to water.

Examples of useful inorganic hardening agents are aluminum phosphate, magnesium phosphate, tripolyphosphoric acid and aluminum tripolyphosphate; oxides of metals such as magnesium and zirconium; carbonates, sulfates, sulfides and chlorides of polyvalent metals; etc.

The water-soluble organic high-molecular-weight compound, another component of the present composition, acts to inhibit cement odor and to sustain the hydrophilic properties of the film over a prolonged period of time. The water-soluble organic high-molecular-weight compound is used in an amount of 0.01 to 5 parts by weight per part by weight of the alkali silicate. If used in an amount less than 0.01 part by weight, the compound is unable to effectively prevent release of the odor and to fully sustain the hydrophilic properties. Conversely, presence of more than 5 parts by weight of the compound renders the film easily soluble in water, failing to sustain the hydrophilic properties.

Examples of useful water-soluble organic high-molecular-weight compounds are a) natural high-molecular-weight compounds of the polysaccharide type, b) natural high-molecular-weight compounds of the water-soluble protein type, c) water-soluble synthetic high-molecular-weight compounds of the anionic, nonionic or cationic addition polymerization type, and d) water-soluble high-molecular weight compounds of the polycondensation type.

Examples of useful polysaccharide-type compounds a) are carboxymethylcellulose, guar gum, etc.

Examples of useful protein-type compounds b) are gelatin, etc.

Examples of synthetic compounds c) of the anionic or nonionic addition polymerization type are polyacrylic acid, sodium polyacrylate, polyacrylamide, these compounds as partially hydrolyzed, polyvinyl alcohol, polyhydroxyethyl (meth)acrylate, acrylic acid copolymer, maleic acid copolymer, and alkali metal salts, organic amine salts or ammonium salts of these compounds. These compounds of the addition polymerization type are also usable as carboxymethylated, sulfonated or otherwise modified.

Examples of useful synthetic compounds c) of the cationic addition polymerization type are polyethyleneimine, Mannich-modified compound of polyacrylamide, diacryldimethy aluminum chloride, and polyalkylamino (meth)acrylates such as dimethylaminoethyl acrylate.

Examples of useful water-soluble high-molecular-weight compounds of the polycondensation type are polyalkylene polyols such as polyoxyethylene glycol, polycondensation product of epichlorohydrin and a polyamine such as ethylenediamine or hexamethyldiamine, water-soluble polyurethane resin prepared by polycondensation of water-soluble polyether and polyisocyanate, polyhydroxymethylmelamine resin, etc.

Preferable among the above-mentioned water-soluble organic high-molecular-weight compounds are those of the anionic addition polymerization type having a carboxylic acid group or a group of salt thereof, more preferable examples being polyacrylic acid, acrylic acid copolymer.

Examples of preferred acrylic acid copolymers and maleic acid copolymers are copolymer of acrylic acid and maleic acid, copolymer of acrylic acid or maleic acid, and methacrylic acid, methyl methacrylate, ethyl methacrylate, hydroxyethyl methacrylate, itaconic acid, vinylsulfonic acid or acrylamide, and copolymer of vinylsulfonic acid and acrylamide.

The composition comprising an alkali silicate, an inorganic hardening agent and a water-soluble high-molecular-weight compound is used as diluted with water or some other medium. The degree of dilution is determined in view of the desired hydrophilic properties and thickness of the film and ease of application.

To treat the surface of aluminum with an aqueous dilution of the composition (i.e. aqueous solution), the aqueous solution is applied by spraying or with a brush, or aluminum is dipped in the aqueous solution.

The aluminum treated with the aqueous solution is heated at 50 to 200$^{\circ}$ C, preferably 150 to 180$^{\circ}$ C, for 30 seconds to 30 minutes, whereby a hydrophilic film is formed on the surface of the aluminum. If the heat-drying temperature is below 50$^{\circ}$ C, the composition fails to form a satisfactory film, while heating at a temperature above 200$^{\circ}$ C is ineffective and adversely affects the aluminum material. Further if the heat-drying time is less than 30 seconds, the composition will not be made into a satisfactory film, whereas if it exceeds 30 minutes, reduced productivity will result. The treated aluminum may be heated for a short period of 30 seconds to 1 minute when a high heating temperature of 160 to 200$^{\circ}$ C is used, while the heat-drying time needs to be extended at low temperatures. When the coating is not fully heat-dried, the composition fails to form a satisfactory film.

The hydrophilic film is formed on the surface of aluminum in an amount of 0.1 to 10 g/m$^2$, preferably

$0.5$ to $3 \ g/m^2$. When in an amount of at least $0.1 \ g/m^2$, the film has good initial hydrophilic properties. However, it is desirable to form the film in an amount of at least $0.5 \ g/m^2$ so as to assure satisfactory hydrophilic properties over a prolonged priod of time. If the amount exceeds $10 \ g/m^2$, a longer drying time is required, and the film adversely affects the workability of the resulting material by press forming.

The aqueous solution may further incorporate therein known addititives. Examples of such additives include inorganic corrosion inhibitors such as sodium nitrite, sodium polyphosphate and sodium metaborate, and organic corrosion inhibitors such as benzoic acid or salts thereof, p-nitrobenzoic acid or salts thereof, cyclohexylamine carbonate and benzotriazole.

To give increased corrosion resistance to aluminum and to enhance the adhesion of the hydrophilic film to aluminum, it is desirable to form a corrosion-resistant film first on the surface of aluminum by the chromate process, phosphoric acid-chromate process, boehmite process, phosphate process or the like, and thereafter surface-treat the aluminum with the present composition.

Furthemore, the thin aluminum plate having the hydrophilic film of the present composition formed thereon is preferably coated with a covering layer comprising a wax or the combination of wax and polyvinyl alcohol or like water-soluble high-molecular-weight compound to reduce the wear of the die to be used for shaping the thin aluminum plate into the desired shape of fins. Use of such wax and water-soluble high-molecular-weight compound is described in detail in Unexamined Japanese Patent Publication SHO 59-118450.

The present invention will be further described with reference to examples and comparative example.

Example 1

A specimen was prepared using an aluminum plate made of JIS A-1100H24 and measuring 1 mm in thickness, 50 mm in width and 100 mm in length.

The surface of the aluminum plate was first treated by the chromate process to form an oxide film thereon and then coated with an aqueous solution comprising a hydrophilic film forming composition of the invention which was composed of three components in specified proportions as listed in the table below. (The solution contained 1.5% of the listed alkali silicate calculated as solids.) The coated plate was thereafter heat-dried at 160° C for 10 minutes to form a hydrophilic film on the surface of the aluminum plate. The resulting aluminum plate was shaped into a heat exchanger fin.

Examples 2 to 6

The same procedure as in Example 1 was repeated using hydrophilic film forming compositions comprising different components in different proportions as listed below.

Comparative Example

The procedure of Example 1 was repeated using a film forming composition which was free from any water-soluble organic hight-molecular-weight compound.

Evaluation Test

To evaluate the properties of the fins thus prepared, the fins were checked for hydrophilic properties and cement odor, with the results listed below.

For the evaluation of the hydrophilic properties, the angle of contact between the fin and water was measured in the initial stage, after immersing the fin in running water for 100 hours (water resistance) and after immersing the fin in oleic acid for 16 hours and in running water for 8 hours alternately, five times in each liquid (oil resistance).

The hydrophilic properties were evaluated according to the criteria of: A when the angle of contact was up to 15 degrees, and B when the angle of contact was 16 to 30 degrees. The defree of cement odor was determined according to the criteria of: A for no odor, B for a slight odor, and C for a very strong odor.

For comparison, the same aluminum plate as used above was coated with an aqueous solution of an alkali silicate and inorganic hardening agent and then dried by heating to form an alkali silicate film on the aluminum plate. The resulting plate was evaluated in the same manner as above with the results also listed below.

| Example | Composition of hydrophilic film (wt. part) | | | Hydrophilic properties | | | Cement odor |
|---|---|---|---|---|---|---|---|
| | Alkali silicate | Inorganic hardening agent | Water-soluble organic high-molecular-weight compound | Initial | Water resist-ance | Oil resist-ance | |
| 1 | Sodium silicate (1) | Aluminum phosphate (0.5) | Na salt of acrylic acid-acrylamide copolymer (1) | A | A | A | A |
| 2 | Sodium silicate (1) | Aluminum tripoly-phosphate (0.2) | K salt of acrylic acid-acrylamide copolymer (2) | A | A | A | A |
| 3 | Potassium silicate (1) | Aluminum phosphate (0.2) | Na salt of acrylic acid-hydroxyethyl methacrylate copolymer (1) | A | A | A | A |
| 4 | Lithium silicate (1) | Tripoly-phosphoric acid (0.1) | K salt of maleic acid-acrylamide copolymer (0.5) | A | A | A | B |
| 5 | Sodium silicate (1) | Zirconium oxide (0.1) | Polyethyleneimine (0.5) | A | A | A | B |
| 6 | Potassium silicate (1) | Tripoly-phosphoric acid (1) | Vinylsulfonic acid-acrylamide copoly-mer (1) | A | A | A | B |
| Comp. Ex. | Potassium silicate (1) | Tripoly-phosphoric acid (0.5) | – | A | A | A | C |

13

The above table reveals that the hydrophilic films formed on the surfaces of the fins using the compositions of the invention have outstanding hydrophilic perperties and are almost free from any cement odor unlike the film of the comparative example.

CLAIMS

1. A composition for forming a hydrophilic film on aluminum comprising an alkali silicate, an inorganic hardening agent and a water-soluble organic high-molecular-weight compound.

2. A composition as defined in claim 1 which comprises 0.1 to 5 parts by weight of the inorganic hardening agent and 0.01 to 5 parts by weight of the water-soluble organic high-molecular-weight compound per part by weight of the alkali silicate.

3. A composition as defined in claim 1 wherein the alkali silicate is 2 to 5 in the ratio of $SiO_2/M_2O$ wherein M is an alkali metal.

4. A composition as defined in claim 1 wherein the alkali silicate is a salt selected from the group consisting of sodium silicate, potassium silicate and lithium silicate.

5. A composition as defined in claim 1 wherein the inorganic hardening agent is a compound selected from the group consisting of aluminum phosphate, magnesium phosphate, tripolyphosphoric acid, aluminum tripolyphosphate, magnesium oxide, zirconium oxide, and carbonates, sulfates, sulfides and chlorides of polyvalent metals.

6. A composition as defined in claim 1 wherein the water-soluble organic high-molecular-weight compound is a compound selected from the group consisting of natural high-molecular-weight compound of the polysaccharide type, natural high-molecular-weight compound of the water-soluble protein type, water-soluble synthetic compound of the anionic, nonionic or cationic addition polymerization type and water-soluble high-molecular-weight compound of the polycondensation type.

7. A composition as defined in claim 6 wherein the natural high-molecular-weight compound of the polysaccharide type is carboxymethylcellulose or guar gum.

8. A composition as defined in claim 6 wherein the natural high-molecular-weight compound of the water-soluble protein type is gelatin.

9. A composition as defined in claim 6 wherein the synthetic high-molecular-weight compound of the anionic or nonionic addition polymerization type is a compound selected from the group consisting of polyacrylic acid, sodium polyacrylate, polyacrylamide, partially hydrolyzed products of these compounds, polyvinyl alcohol, polyhydroxyethyl (meth)acrylate, acrylic acid copolymer, maleic acid copolymers, alkali metal salts, organic amine salts and ammonium salts of these compounds, and modified water-soluble synthetic high-molecular-weight compounds prepared by carboxymethylating or sulfonating said synthetic high-molecular-weight compounds of the addition polymerization type.

10. A composition as defined in claim 6 wherein the sythetic high-molecular-weight compound of the cationic addition polymerization type is a compound selected from the group consisting of polyethyleneimine, Mannich-modified compound of polyacrylamide, diacryldimethyl aluminum chloride and polyalkylamino (meth)acrylate.

11. A composition as defined in claim 6 wherein the water-soluble high-molecular-weight compound of the polycondensation type is a compound selected from the group consisting of polyalkylene polyol, polycondensation product of polyamine and epichlorohydrin, water-soluble polyurethane resin prepared by the polycondensation of water-soluble polyether and polyisocyanate and polyhydroxymethylmelamine resin.